(19) Europäisches Patentamt

European Patent Office

Office européen des brevets

(11) Veröffentlichungsnummer: **0 307 578**
**A1**

(12) **EUROPÄISCHE PATENTANMELDUNG**

(21) Anmeldenummer: **88111293.2**

(22) Anmeldetag: **14.07.88**

(51) Int. Cl.⁴: **C09D 5/00 , D21H 1/34 , C09J 7/02 , B05D 1/32**

Die Bezeichnung der Erfindung wurde geändert (Richtlinien für die Prüfung im EPA, A-III, 7.3).

(30) Priorität: **14.08.87 DE 3727078**

(43) Veröffentlichungstag der Anmeldung:
**22.03.89 Patentblatt 89/12**

(84) Benannte Vertragsstaaten:
**AT BE CH DE ES FR GB IT LI NL SE**

(71) Anmelder: **Beiersdorf Aktiengesellschaft**
**Unnastrasse 48**
**D-2000 Hamburg 20(DE)**

(72) Erfinder: **Skurnia, Uwe, Dr.**
**Pappelweg 17b**
**D-2110 Buchholz(DE)**
Erfinder: **Pomaska, Rüdiger**
**Greickstrasse 23b**
**D-2000 Hamburg 54(DE)**
Erfinder: **Knolle, Herbert, Dr.**
**Schaumannskamp 212**
**D-2057 Reinbek(DE)**
Erfinder: **Jauchen, Peter**
**Sachsenweg 18/0**
**D-2000 Hamburg 61(DE)**

(54) **Trennschichten auf Silikonbasis.**

㊲ Silikon-Release auf einem Träger, dadurch gekennzeichnet, daß der Träger zunächst mit einer Grundierung mit geringer Trennwirkung ausgerüstet ist, auf welcher mittels Siebdruck aus wäßriger Emulsion, einem 100%igen System ausreichender Viskosität, oder einem System mit extrem kurzen Reaktionszeiten ein rasterartiges Silikon-Release aufgebracht ist.

EP 0 307 578 A1

## Silikon-Release

Die Erfindung betrifft ein Silikon-Release auf einem Träger sowie damit ausgerüstete Gegenstände, wie Trennpapiere oder Selbstklebebänder.

Release-Schichten sind seit langem Stand der Technik. Neben einer großen Zahl von Publikationen gibt es auch zahlreiche handelsübliche Silikone, die man als Release vorzugsweise in relativ dünnen Schichten auf Träger für Selbstklebebänder, Trennpapiere oder dergleichen streichen kann. Neben einem hohen Preis haben die bisher bekannten Silikon-Release für die praktische Anwendung jedoch auch Nachteile. So ist es oftmals schwierig, damit ausgerüstete Trennpapiere oder Selbstklebebänder zu bedrucken oder zu beschreiben und es führt vielfach zu Schwierigkeiten, die hochwirksamen Silikon-Release in ausreichend dünnen und gleichmäßigen Schichten aufzutragen, um eine einheitliche Release-Wirkung zu erzielen. Bei der hohen Wirksamkeit der Silikon-Release ist es zudem in der Praxis schwierig, eine ausreichend schwache Release-Wirkung einzustellen, da in gleichmäßiger Form nicht beliebig dünne Schichten aufgetragen werden können.

Demgemäß sind auch bereits Vorschläge gemacht worden, die Trenneigenschaften eines Silikons mittels Additiven abzuschwächen, womit allerdings die Dauerhaftigkeit der damit erzielten Trennwirkung leidet, d.h. der einmal eingestellte Effekt ist über längere Zeit nicht konstant. Es ist auch bereits vorgeschlagen worden, den Grad der Adhäsion je nach Bedarf verschieden einzustellen, indem auf der Rückseite von Klebebändern und dergleichen nur Teile, etwa in Streifen oder rasterartigen Mustern, mit einem Silikon versehen werden, vgl. DE-PS 855.746, ein Vorschlag, der sich allerdings in mehr als 30 Jahren in der Praxis nicht hat durchsetzen können. Vielmehr ließen sich die geschilderten Probleme mit den Vorschlägen des Standes der Technik nicht lösen, wobei diese Probleme bei porösen Trägermaterialien, wie Papier, verstärkt auftreten.

Bis in die neuere Zeit wurden Release-Massen verbessert, ohne jedoch die obigen Nachteile grundsätzlich vermeiden zu können. So beschreibt die US-PS 4,386,135 eine lösungsmittelfreie Silikon-Masse als Release, die insbesondere für Selbstklebebänder vorgesehen ist, die auch insbesondere für Papier und den Auftrag mittels eines Offset-Gravurcoaters geeignet ist. Auch dieser Vorschlag vermag die oben geschilderten Nachteile in der Praxis nicht zu beheben, ebenso wie der in diesem Patent zitierte umfangreiche Stand der Technik. Ein rasterartiges Aufdrucken eines Releases mittels Tiefdruck kann in der Praxis nicht überzeugen, insbesondere beim Beschichten von Papier, da vielfach eine Beschädigung und Herausrupfen einiger Teile des Trägers in Kauf genommen werden müssen.

Aufgabe der Erfindung war es, hier Abhilfe zu schaffen, nämlich ein verbessertes Silikon-Release auf einem Träger für Trennpapiere, Trennfolien, Gewebe, Vliese, Selbstklebebänder und dergleichen. Erstrebt war dabei ein Release, das genau steuerbar und in seiner Wirkung vorherbestimmbar ist, das in seiner Release-Wirkung auch ohne Veränderung über lange Zeit beständig ist, das ein gleichmäßiges Abziehen gewährleistet, keine Verluste beim Auftrag auf poröse Träger wie Papier mit sich bringt, praxisgerecht anwendbar ist und womöglich bedruckbar oder beschriftbar ist.

Gelöst wird diese Aufgabe durch ein Silikon-Release auf einem Träger, das dadurch gekennzeichnet ist, daß der Träger zunächst mit einer Grundierung mit geringer Trennwirkung ausgerüstet ist, auf welcher mittels Siebdruck aus wäßriger Emulsion, einem 100%igen System oder einem System mit extrem kurzen Reaktionszeiten, ein rasterartiges Silikon-Release aufgebracht ist.

Insbesondere geeignet ist dieses Silikon-Release für Träger aus Papier, vor allem für Rohpapiere mit vorzugsweise etwa 40 - 160 g pro m², wie sie für Trennpapiere üblich sind, aber auch für Folien, vorzugsweise im Bereich von 10 - 200 My (PE, PTE), Vliese, Gewebe und Trennrohkrepp.

Die erfindungsgemäß eingesetzten Grundierungen haben selbst eine nur geringe Trennwirkung. Zum einen schließen sie eventuelle Poren einer nicht-geschlossenen Trägeroberfläche und erhöhen die Rupffestigkeit. Andererseits haben die Grundierungen einen entscheidenden Einfluß auf das Trennverhalten des später fertig beschichteten Trägers, insbesondere des Trennpapiers, wobei durch die Wahl der geeigneten Grundierung einerseits das Trennwertniveau und andererseits der Einfluß der Siebgröße auf das Trennverhalten beeinflußt werden kann. Dabei beeinflussen sich die Trennwirkung des Silikon-Releases und die an sich geringe Trennwirkung der Grundierung in vorteilhafter Weise und ergeben einen synergistischen Effekt für die angestrebte Trennwirkung. Geeignete Grundierungen sind bekannt und handelsüblich, z.B. Lösungen von Chromstearatkomplexen mit geeigneten Filmbildern, wie Polyvinylalkoholen. Die Trennwirkungen solcher Grundierungen liegen bevorzugt bei größer als 500 cN/cm.

Erfindungsgemäß läßt sich die Release-Wirkung steuern, zum einen durch die Wahl eines Siebes mit geeigneter mesh-Zahl und Lochgröße, zum anderen durch die Art der Grundierung. Die damit ausgerüsteten Trennpapiere, Trennfolien, Selbstklebebänder zeichnen sich durch ein außerordentlich gleichmäßiges Abziehen von einer Rolle aus, was insbesondere bei Selbstklebebändern ein für die Praxis relevanter Fortschritt ist. Bisher bekannte Release-Schichten führten vielfach zu einem Verblocken von Klebebandrollen und einem unsauberen Strichbild mit Fleckenbildung wegen einer kaum zu vermeidenden Aufladung beim Streichen, was zu einem ungleichmäßigen Abziehen mit Knattern der so ausgerüsteten Klebebandrolle führt.

Erfindungsgemäß lassen sich insbesondere Träger mit einem Silikon-Release ausrüsten, das Trennwerte im Bereich von 20 - 500 cN/cm ermöglicht, bevorzugt ist dabei ein Bereich von 50 bis 150 cN/cm, der für die Praxis von besonderer Bedeutung ist.

Bevorzugt werden etwa 20 bis 80 % der zu bedruckenden Fläche mit dem Silikon-Release versehen, insbesondere etwa 30 - 50 %. Vorteilhaft verwendet man ein Raster einer Siebgröße von etwa 10 - 450 mesh, insbesondere 80 - 180 mesh. Das Silikon wird vorzugsweise in einer Menge von 0,2 - 2,0 g/m² aufgetragen.

Geeignete Silikone sind insbesondere wäßrige, additionsvernetzende Emulsions-Silikone und 100%ige Systeme sowie Systeme mit extrem kurzen Reaktionszeiten, die ggf. mittels Elektronenstrahlen vernetzt werden können, wie sie handelsüblich sind. Ein solches aus mehreren Komponenten bestehendes Emulsions-System hat eine wasserähnliche Konsistenz und ist in dieser Form zum Siebdruck wenig geeignet. Das für den Siebdruck notwendige Fließverhalten wird vorteilhaft durch Zugabe von Substanzen zur Regulierung des Fließverhaltens eingestellt, wie durch Polyvinylakohole, Carboxymethylcellulosen und dergleichen. Die Menge solcher Zusatzstoffe beträgt bevorzugt etwa 0,5 bis 5,0 Gew.-% bezogen auf die verwendete Emulsion. Im allgemeinen soll eine Siebdruckmasse ein thixotropes Fließverhalten aufweisen. Damit kann ein befriedigendes Druckbild mit diskreten Punkten erzielt werden, wie dies für das erfindungsgemäße Release erwünscht ist. Bevorzugt erhalten die wäßrigen Emulsionen 10 - 50 Gew.-% additionsvernetzendes Silikon, insbesondere etwa 40 Gew.-%.

Geeignete 100%ige Systeme, mit denen sich das erfindungsgemäße Silikon-Release mittels Siebdruck herstellen läßt, sind handelsüblich und z.B. als Wacker Abhhäsiv 920, oder SLM 40021 erhältlich. Die Viskosität solcher 100 %iger Systeme liegt vorteilhaft bei etwa 400 - 20.000 mPa·s, wobei auch hier ggf. Additive zur Regulierung des Fließverhaltens zugesetzt werden können, wie gefällte hydratisierte Kieselsäuren.

Erfindungsgemäß lassen sich verschiedenartigste Träger mit einem Silikon-Release ausrüsten, die ggf. mit einem Selbstklebeband oder dergleichen in Berührung kommen sollen, beispielsweise Höschenwindeln. Der Verschluß von Höschenwindeln erfolgt vielfach durch Klebebänder, die von einem er Höschenwindel auf das andere geklebt werden, wobei auf diesem anderen Ende vielfach ein sogenanntes Target-Tape vorgesehen wird, dessen Rückseite mit einem Release ausgerüstet ist, um ein späteres Öffnen und Wiederverschließen der Höschenwindel zu ermöglichen. Erfindungsgemäß kann nun ein solches Target-Tape selbst auf seiner Rückseite mit dem erfindungsgemäßen Release ausgerüstet sein, oder aber das Target-Tape ist entbehrlich, wenn die Höschenwindel an der entsprechenden Stelle selbst mit dem erfindungsgemäßen Release ausgerüstet ist. Letzteres bedeutet für die Praxis einen außerordentlichen Vorteil und eine Vereinfachung, zumal die betreffende Stelle der Höschenwindel auch noch entsprechend bedruckt werden kann, um dem Benutzer Hinweise für die Handhabung zu geben.

Im folgenden wird die Erfindung anhand von Ausführungsbeispielen näher beschrieben:


Beispiel 1


Wäßrige, additionsvernetzende Emulsionssilikone


·In eine Mischung aus gleichen Teilen Dow Corning Q2-7198 Emulsionscoating und Q2-7199 Catalyst Emulsion werden unter Rühren langsam 2,5 Gewichtsteile (bezogen auf die fertige Silikonmischung) Na-Carboxymethylcellulose eingestreut. Die Cellulose ist im Handel unter der Bezeichnung Tylose C 10 000 bei der Firma Hoechst erhältlich.

Nach einer kurzen Quellphase dickt die Mischung merklich an. Sie wird bis zur einheitlichen Konsistenz weitergerührt. Nicht vollständig gelöste, angequollene Tylosteilchen werden vor dem Drucken entfernt. Die Viskosität der Masse liegt bei 900 dPa·s.

Die Masse kann jetzt in handelsüblichen Rundsieben, z.B. Pentaschablonen der Fa. Stork, auf die beschriebenen Träger gedruckt werden. Dabei sind, je nach Qualität des Druckbildes, die Rakeldrucke verschieden einstellbar.

In diesem Beispiel wurde ein Natronkraftpapier AV 100 von der Firma Kämmerer mit einem Quadratmetergewicht von 90 Gramm bedruckt.

Der Träger wurde mit verschiedenen Grundierungen vorbehandelt.

Bei den Grundierungen handelt es sich um

    A) isocyanatvernetzte Polyvenylacetate und

    B) einen handelsüblichen Chromsteararkomplex, der zur besseren Filmbildung mit PVA abgemischt wurde.

Dabei waren Auftragsmengen von 1 - 3 g/m² ausreichend.

Auf dem so vorbereiteten Träger wurde die Silikonmasse mit mesh-Zahlen von 80 - 125 gedruckt. Die Silikonschicht wurde in einem Kanaltrockner bei 80° -150° C vernetzt.

Mit einem Naturkautschukbestand wurden nach 24stündiger Lagerung, unter Gewichtsbelastung bei 40° C, die Trennkräfte gemessen.

Als Siebdruckmasse wurde eine solche von Dow Corning verwendet.

| Grundierung | mesh | Viskosität Silikon d Pas | Trennkraft Kautschuk cN/cm |
|---|---|---|---|
| A | ohne Silikon | | 500 |
| A | 80 | 900 | 380 |
| A | 100 | 900 | 300 |
| A | 125 | 350 | 190 |
| B | ohne Silikon | | Träger spaltet |
| B | 80 | 900 | 200 |
| B | 125 | 900 | 170 |
| B | 80 | 350 | 210 |
| B | 125 | 350 | 150 |

Als Silikonauftragsmengen wurden mittels Röntgenfluoreszensspektroskopie bei 80 mesh ca. 0,5 g/m², bei 100 mesh ca. 0,35 g/m² ermittelt.

Beispiel 2

100%iges, additionsvernetzendes, lösemittelfreies Silikon

Es wurde folgende Silikontype der Firma Wacker, mit einer Viskosität des Grundpolymers von 200 dPa·s eingesetzt. Auf ein Andicken des Ansatzes wurde verzichtet. Bei der Abmischung wurde die Rezepturempfehlung des Herstellers nicht verändert:

100 Gew.-Teile    Si-Dehäsiv SLM 40021

3 Gew.-Teile    Vernetzer V 90

8 Gew.-Teile    Katalysator VP 1505

werden nacheinander unter Rühren vermischt. Nach einer ca. einstündigen Ruhezeit, die dem Entlüften der Masse dient, ist die Masse verarbeitbar.

Bei dem Grundpolymer handelt es sich um ein vinylgruppenhaltiges Dimethylpolysiloxan, der Vernetzer entspricht einer Alkylhydrogenpolysiloxanverbindung und bei dem Katalysator handelt es sich um einen typischen organischen Platinkomplex.

Dieser Silikonansatz wurde, analog zu dem im Beispiel 1 beschriebenen Verfahren, auf verschieden vorbehandelte Papierträger gedruckt. Dabei wurden die im Beispiel 1 näher beschriebenen Grundierungen verwendet.

Die Vernetzung wurde in einem Kanaltrockner bei 80-140° C durchgeführt. Die Maschinengeschwindigkeiten lagen zwischen 50-80 m/min.

Unter diesen Bedingungen wurden separate, fladenförmige Silikonpunkte mit gleichmäßigen Abständen zueinander aufgebracht.

So wurden bei einem grundierten und wie oben behandelten Natronkraftpapier Trennkräfte von 130-190 cN/cm bei 80 mesh und 90 - 120 cN/cm bei 100 mesh, gegenüber einem Kautschuktestband ermittelt.

Mit dem unter Beispiel 1 beschriebenen Prüfverfahren wurden gegen das Kautschukband folgende Meßwerte ermittelt:

| Grundierung | mesh | Viskosität | Trennkraft |
|---|---|---|---|
| A | 80 | 200 | 130 - 190 |
| A | 100 | 200 | 90 - 120 |
| B | 80 | 200 | 80 |
| B | 100 | 200 | 60 |

**Ansprüche**

1. Silikon-Release auf einem Träger, dadurch gekennzeichnet, daß der Träger zunächst mit einer Grundierung mit geringer Trennwirkung ausgerüstet ist, auf welcher mittels Siebdruck aus wäßriger Emulsion, einem 100%igen System ausreichender Viskosität, oder einem System mit extrem kurzen Reaktionszeiten ein rasterartiges Silikon-Release aufgebracht ist.

2. Release nach Anspruch 1, dadurch gekennzeichnet, daß der Träger aus Folie, Vlies, Gewebe oder Trennrohkrepp, insbesondere aber aus Papier besteht.

3. Release nach Anspruch 1, dadurch gekennzeichnet, daß die wäßrige Emulsion ein additionsvernetzendes Silikon mit einem Gehalt von 10 bis 50 Gew.-%, insbesondere 40 Gew.-% aufweist, ggf. unter Zusatz von Additiven zur Regulierung des Fließverhaltens im thixotropen Bereich, wie Polyvinylalkohole und/oder Carboxymethylcellulosen.

4. Release nach Anspruch 1, dadurch gekennzeichnet, daß das 100%ige System eine Viskosität von 400 bis 20 000 mPa.s aufweist, ggf. unter Zusatz von Additiven zur Regulierung des Fließverhaltens, wie gefällte hydratisierte Kieselsäuren.

5. Release nach Anspruch 1, dadurch gekennzeichnet, daß das Raster einer Siebgröße von 10 - 450 mesh, insbesondere 80 - 180 mesh entspricht.

6. Release nach Anspruch 1, dadurch gekennzeichnet, daß das Silikon vorzugsweise in Mengen von 0,2 - 2,0 g/m² aufgetragen ist.

7. Trennpapier, Trennfolie, Vlies, Gewebe, Trennrohkrepp, Selbstklebeband oder dergleichen, ausgerüstet mit einem Release gemäß einem der Ansprüche 1 - 6.

8. Verfahren zur Herstellung eines Silikon-Releases nach einem der Ansprüche 1 - 6, dadurch gekennzeichnet, daß man zunächst einen Träger mit einer Grundierung mit geringer Trennwirkung ausrüstet, und darauf mittels Siebdruck aus wäßriger Emulsion, einem 100%igen System ausreichender Viskosität oder einem System mit extrem kurzen Reaktionszeiten ein rasterartiges Silikon-Release aufträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,Y | GB-A-2 040 734 (MITSUI PETROCHEMICAL INDUSTRIES) * Ansprüche 1,13-16; Seite 3, zeile 57 - Seite 5, Zeile 48; Beispiel 7 (Seiten 14,15) * | 1-3,6-8 | C 09 D 5/00 D 21 H 1/34 C 09 J 7/02 B 05 D 1/32 |
| X,Y | US-A-3 503 782 (E.C. AYRES) * Figuren 1-4; Ansprüche 1-4; Spalte 2, Zeile 50 - Spalte 3, Zeile 12; Spalte 5, Zeile 18 - Spalte 6, Zeile 50; Beispiel * | 1,2,4,7 ,8 | |
| Y | DE-A-2 921 966 (VEB ELEKTRONIK GERA) * Ansprüche 1,2; Seite 5 * | 1,4,5,8 | |
| A | DE-A-2 013 077 (PAPIERWERKE "WALDHOF-ASCHAFFENBURG") * Insgesamt * | 2,3,6,7 | |
| A | GB-A-2 019 254 (MINNESOTA MINING AND MANUFACTURING CO.) | | RECHERCHIERTE SACHGEBIETE (Int. Cl.4) |
| A | EP-A-0 209 103 (C. NIJFFELER) | | B 05 D B 41 M C 09 J D 21 H |
| A | DE-A-3 510 324 (BEIERSDORF) | | |
| D,A | DE-C- 855 746 (BEIERSDORF) | | |
| D,A | US-A-4 386 135 (K.J. CAMPBELL et al.) | | |

Der vorliegende Recherchenbericht wurde für alle Patentansprüche erstellt

| Recherchenort | Abschlußdatum der Recherche | Prüfer |
|---|---|---|
| DEN HAAG | 23-11-1988 | NESTBY K. |